Europäisches Patentamt

European Patent Office

Office européen des brevets

(11) Numéro de publication: **0 232 663**
A1

## (12) DEMANDE DE BREVET EUROPEEN

(21) Numéro de dépôt: 86420038.1

(22) Date de dépôt: 07.02.86

(51) Int. Cl.⁴: **B01J 10/00** , B01F 3/04 , B01F 11/00 , //B01D47/04

(43) Date de publication de la demande:
19.08.87 Bulletin 87/34

(84) Etats contractants désignés:
AT BE CH DE GB IT LI LU NL SE

(71) Demandeur: **CERIES**
**Saint-Pierre-de-Senos**
**F-84500 Bollene(FR)**

(72) Inventeur: **Belmont, Jacques**
**5 Impasse Janine**
**Genas (Rhône)(FR)**
Inventeur: **Fremeaux, Pierre**
**8 rue de Verdun**
**Jonage (Rhône)(FR)**

(74) Mandataire: **Maureau, Bernard et al**
**Cabinet GERMAIN & MAUREAU 20, boulevard**
**E. Deruelle B.P. 3011**
**F-69392 Lyon Cédex 03(FR)**

(54) Système de pulsation pour colonne d'extraction liquide-gaz.

(57) La colonne d'extraction (1) est alimentée périodiquement en phase liquide et en phase gazeuse, la discontinuité d'alimentation engendrant des mouvements pulsatoires qui favorisent le contact entre les deux phases à l'intérieur de la colonne.

Sur les deux tubulures (2, 4) d'alimentation de la colonne (1) en phase liquide et en phase gazeuse sont interposées deux vannes (9, 10) asservies directement ou indirectement à une minuterie réglable (11) déterminant la discontinuité et la périodicité d'alimentation de la colonne dans les deux phases.

# SYSTEME DE PULSATION POUR COLONNE D'EXTRACTION LIQUIDE-GAZ

Quelles que soient leurs applications, par exemple lavage d'une phase gazeuse par une phase liquide, aération d'une phase liquide par une phase gazeuse, oxydation d'une phase liquide par une phase gazeuse, les colonnes d'extraction liquide-gaz doivent créer un contact intime entre les deux phases. Pour obtenir ce contact, il faut former une émulsion entre la phase liquide et la phase gazeuse.

Ce but est atteint :

-en aménageant dans la colonne un garnissage interne qui constitue une multitude d'obstacles propres à créer des turbulences et des cisaillements dans l'écoulement des deux phases,

-et en donnant à ces deux phases non pas des mouvements de déplacement continu, mais des mouvements pulsatoires qui imposent aux fluides en présence des ondes de choc dont résultent des mouvements alternatifs et des vitesses d'écoulement saccadées.

Ces mouvements pulsatoires sont habituellement obtenus mécaniquement ou pneumatiquement, ce qui conduit à des aménagements complexes et coûteux, notamment lorsqu'il s'agit d'installations nécessitant de grosses cylindrées, c'est-à-dire dans lesquelles le volume de liquide et de gaz déplacé à chaque pulsation est grand.

L'invention propose un système de pulsation qui est plus simple, donc moins coûteux, et qui est en outre plus efficace, plus fiable et plus robuste.

Selon l'invention, ce système de pulsation est basé sur le principe de l'alimentation périodique de la colonne en phase liquide et en phase gazeuse, la discontinuité d'alimentation engendrant les mouvements pulsatoires qui favorisent le contact entre les deux phases.

Ce but est atteint en interposant sur les deux tubulures d'alimentation de la colonne en phase liquide et en phase gazeuse deux vannes asservies directement ou indirectement à une minuterie réglable déterminant la discontinuité et la périodicité d'alimentation de la colonne dans les deux phases.

Dans une forme d'exécution de ce système de pulsation, un clapet de retenue est monté en aval de la vanne sur chacune des deux tubulures de liquide et de gaz ; et en amont de ce clapet, ces deux tubulures sont équipées respectivement d'un amortisseur évitant les coups de bélier et d'un réservoir tampon.

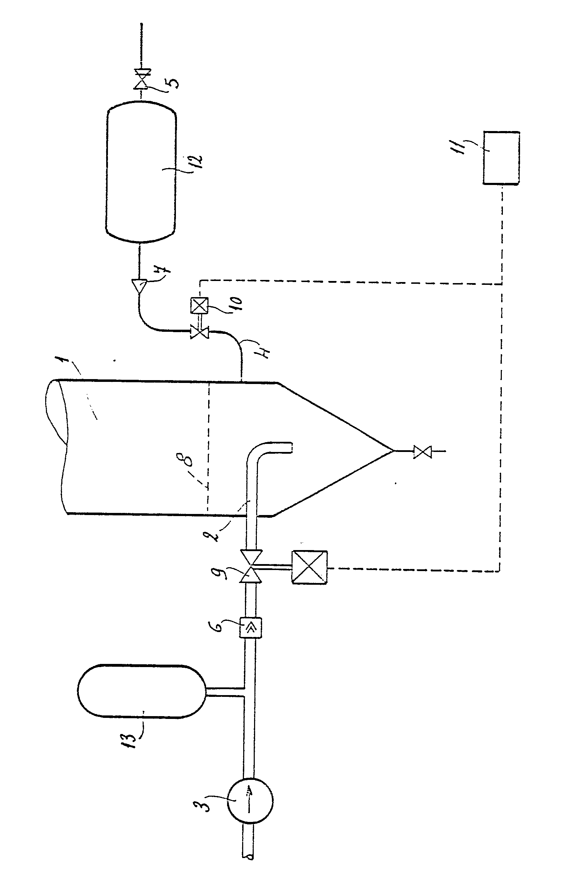

L'invention sera bien comprise d'ailleurs à l'aide de la description qui suit, en référence au dessin schématique annexé représentant une forme d'exécution de l'ensemble de ce système de pulsation adapté à une colonne d'extraction liquide-gaz, dans laquelle un liquide doit être traité par un gaz.

Dans ce dessin, (1) désigne la colonne d'extraction qui consiste en une colonne à pulvérisation du type habituel recevant à sa base, d'une part, le liquide à traiter, et d'autre part, le gaz de traitement. Le liquide à traiter est admis au travers d'une tubulure (2) par une pompe (3) ; et le gaz de traitement est admis au travers d'une tubulure (4) après avoir été détendu par passage dans un détendeur (5). Des clapets de retenue (6) et (7) sont montés respectivement sur la tubulure (2) et sur la tubulure (4) pour éviter tout retour du liquide et du gaz vers l'amont. A l'ensemble de ces organes, connu en soi, peuvent être adjoints d'autres éléments également connus en soi et destinés à assurer la répartition du gaz dans le liquide, à savoir par exemple un répartiteur ainsi qu'une à plusieurs grilles (8) placées dans la partie inférieure de la colonne audessus de l'arrivée des tubulures - (2) et (4).

Selon l'invention, deux vannes (9) et (10) sont placées respectivement sur la tubulure (2) d'arrivée du liquide et sur la tubulure (4) d'arrivée du gaz, en aval des clapets de retenue correspondants (6) et - (7). Ces deux vannes (9) et (10) sont asservies soit directement, soit par l'intermédiaire d'un fluide moteur auxiliaire, à une minuterie réglable (11) ; et un réservoir tampon de volume convenable est interposé sur la tubulure d'alimentation en gaz entre le détendeur (5) et le clapet de retenue (7), cependant qu'un réservoir amortisseur (13) est placé sur la tubulure (2) d'alimentation en liquide, entre la pompe (3) et le clapet de retenue (6).

L'originalité de cette installation réside dans la présence des deux vannes (9) et (10) dont l'ouverture et la fermeture sont comandées par la minuterie (11). La présence de cette minuterie permet en effet d'alimenter de façon périodique la colonne (1) en liquide à traiter et en gaz de traitement. Cette alimentation périodique, donc discontinue, permet d'obtenir à l'intérieur de la colonne (1) un effet pulsatoire sur le mélange de liquide et de gaz traversant la colonne. Cet effet pulsatoire accélère la division du gaz dans le liquide et améliore ainsi le traitement du liquide par le gaz.

L'effet du réservoir tampon (12) placé sur la tubulure (4) d'alimentation en gaz est d'amortir les à-coups de débit en gaz ; et l'effet du réservoir amortisseur (13) placé sur la tubulure (2) d'alimentation en liquide est d'amortir les à-coups de débit en liquide.

Comme il va de soi, l'invention ne se limite pas à sa seule forme d'exécution qui a été ci-dessus décrite à titre d'exemple ; elle en embrasse, au contraire, toutes les variantes d'exécution, qu'il s'agisse du traitement d'une phase liquide par une phase gazeuse ou d'une phase gazeuse par une phase liquide, et elle étend son champ d'application aux cas où le déclenchement des vannes contrôlant les deux phases serait décalé l'un par rapport à l'autre et où les temps d'ouverture et de fermeture de ces vannes seraient différents et réglés séparément.

## Revendications

1 -Système de pulsation pour colonne d'extraction liquide-gaz, caractérisé en ce que la colonne d'extraction (1) est alimentée périodiquement en phase liquide et en phase gazeuse, la discontinuité d'alimentation engendrant des mouvements pulsatoires qui favorisent le contact entre les deux phases à l'intérieur de la colonne.

2 -Système de pulsation pour colonne d'extraction liquide-gaz selon la revendication 1, caractérisé en ce que sur les deux tubulures (2, 4) d'alimentation de la colonne (1) en phase liquide et en phase gazeuse, sont interposées deux vannes - (9, 10) asservies directement ou indirectement à une minuterie réglable (11) déterminant la discontinuité et la périodicité d'alimentation de la colonne dans les deux phases.

3 -Système de pulsation pour colonne d'extraction liquide-gaz selon les revendications 1 et 2. caractérisé en ce qu'un clapet de retenue (6, 7) est monté en aval de la vanne sur chacune des deux tubulures (2, 4) de liquide et de gaz, et en ce que, en amont de ce clapet, ces deux tubulures sont équipées respectivement d'un amortisseur (13) évitant les coups de bélier et d'un réservoir tampon (12).

0 232 663

## DOCUMENTS CONSIDERES COMME PERTINENTS

| Categorie | Citation du document avec indication. en cas de besoin. des parties pertinentes | Revendication concernee | CLASSEMENT DE LA DEMANDE (Int Ci 4) |
|---|---|---|---|
| Y | FR-A-2 277 610  (ALFA-LAVAL) <br> * Page 1, lignes 1-7; page 3, ligne 35 - page 6, ligne 3;  page 6, lignes 29-34; figure 1 * | 1 | B 01 J  10/00 <br> B 01 F   3/04 <br> B 01 F  11/00 // <br> B 01 D  47/04 |
| A | | 2 | |
| | --- | | |
| Y | FR-A-  556 944  (J.-J. DESCHAMPS) <br> * Page  1, lignes 11-53; page 2, lignes 5-38,67-88; page 3, lignes 3-25; résumé, points 1-3; figures 1-3 * | 1 | |
| A | | 2 | |
| | --- | | DOMAINES TECHNIQUES RECHERCHES (Int. Cl.4) |
| A | FR-A-2 509 996  (DAICEL) <br> *. Page 1, lignes  1-16;  page  4, lignes  14-17;  page 8, ligne 8 - page 9, ligne 15; figure 4 * | 1 | B 01 D <br> B 01 F <br> B 01 J |
| | --- | | |
| A | CHEMICAL ABSTRACTS, vol. 90, no. 16, 16 avril 1979, page 115, revendication no. 123590h, Columbus, Ohio, US; & PL-A-96 443 (POLITECHNIKA WARSZAWSKA) 15-08-1978 | 1 | |
| | ---              -/- | | |

Le present rapport de recherche a été etabli pour toutes les revendications

| Lieu de la recherche | Date d achevement de la recherche | Examinateur |
|---|---|---|
| LA HAYE | 29-09-1986 | SIEM T.D. |

CATEGORIE DES DOCUMENTS CITES

X : particulierement pertinent à lui seul
Y : particulierement pertinent en combinaison avec un autre document de la même catégorie
A : arriere-plan technologique
O : divulgation non-ecrite
P : document intercalaire

T : théorie ou principe à la base de l'invention
E : document de brevet antérieur. mais publié a la date de dépôt ou apres cette date
D : cité dans la demande
L : cité pour d autres raisons

& : membre de la même famille. document correspondant

## DOCUMENTS CONSIDERES COMME PERTINENTS

Page  2

| Categorie | Citation du document avec indication. en cas de besoin. des parties pertinentes | Revendication concernee | CLASSEMENT DE LA DEMANDE (Int Cl 4) |
|---|---|---|---|
| A | US-A-3 167 395  (S.P. SPENCE et al.)<br>* Colonne 1, lignes 10-27; colonne 2, lignes 15-21; figure 1, "répères A,B" *<br><br>----- | 3 | |
| | | | **DOMAINES TECHNIQUES RECHERCHES (Int. Cl.4)** |

Le present rapport de recherche a ete etabli pour toutes les revendications

| Lieu de la recherche | Date d achevement de la recherche | Examinateur |
|---|---|---|
| LA HAYE | 29-09-1986 | SIEM T.D. |

CATEGORIE DES DOCUMENTS CITES

X : particulierement pertinent a lui seul
Y : particulierement pertinent en combinaison avec un autre document de la même categorie
A : arriere-plan technologique
O : divulgation non-ecrite
P : document intercalaire

T : theorie ou principe à la base de l invention
E : document de brevet antérieur. mais publié a la date de dépôt ou apres cette date
D : cité dans la demande
L : cité pour d autres raisons

& : membre de la même famille. document correspondant